**Europäisches Patentamt**

**European Patent Office**

**Office européen des brevets**

(19)

(11) Veröffentlichungsnummer: **0 049 703 B1**

# EUROPÄISCHE PATENTSCHRIFT

(45) Veröffentlichungstag der Patentschrift: **20.06.84**

(51) Int. Cl.³: **F 02 D 5/02**

(21) Anmeldenummer: **81890166.2**

(22) Anmeldetag: **08.10.81**

(54) Verfahren zur Steuerung des Förderbeginns einer Einspritzpumpe sowie Vorrichtung zur Durchführung dieses Verfahrens.

(30) Priorität: **08.10.80 AT 4999/80**

(43) Veröffentlichungstag der Anmeldung:
**14.04.82 Patentblatt 82/15**

(45) Bekanntmachung des Hinweises auf die Patenterteilung:
**20.06.84 Patentblatt 84/25**

(84) Benannte Vertragsstaaten:
**AT DE FR GB**

(56) Entgegenhaltungen:
**FR - A - 2 098 627**
**FR - A - 2 179 084**
**GB - A - 1 413 099**
**GB - A - 2 014 656**
**GB - A - 2 062 902**
**US - A - 3 897 766**

(73) Patentinhaber: **Friedmann & Maier Aktiengesellschaft,
Friedmannstrasse 7, A-5400 Hallein bei Salzburg (AT)**

(72) Erfinder: **Lehner, Gerhard, Dipl. Ing. Dr.,
Pabensteinstrasse 9, A-5400 Hallein (AT)**
Erfinder: **Stipek, Theodor, Dipl.-Ing., Gamperstrasse 15,
A-5400 Hallein (AT)**

(74) Vertreter: **Kretschmer, Adolf, Dipl.-Ing., Patentanwälte
Dipl.Ing. A. Kretschmer Dr. Thomas M. Haffner
Schottengasse 3a, A-1014 Wien (AT)**

# Beschreibung

Die Erfindung bezieht sich auf ein Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrössen, wie Drehzahl, Ladedruck, Motortemperatur od. dgl., gemessen werden und das jeweils vom Motor abgegebene Drehmoment ermittelt wird, worauf in Abhängigkeit von dem ermittelten Motordrehmoment unter Berücksichtigung zumindest der gemessenen Drehzahl der Förderbeginn der Kraftstoffeinspritzpumpe verstellt wird, sowie auf eine zur Durchführung dieses Verfahrens geeignete Vorrichtung.

Es ist bekannt, dass die Schadstoffemission von Verbrennungsmotoren durch geeignete Wahl des Zündzeitpunktes bei Ottomotoren bzw. des Einspritzbeginns bei Einspritzbrennkraftmaschinen, insbesondere bei Dieselmotoren, wesentlich verringert werden kann. Dabei ist als Parameter für die relative Verlagerung dieses massgeblichen Punktes neben der Motordrehzahl auch die Last von Wichtigkeit, die bei Ottomotoren durch die Einleitung des Unterdruckes im Saugrohr auf eine federbelastete Membrane zur Zündzeitpunktverstellung eingesetzt wird.

Aus der DE-A Nr. 2903875 ist bereits eine Einrichtung zur Durchführung des eingangs genannten Verfahrens bekannt geworden, bei welcher neben einem der Drehzahl proportionalen elektrischen Signal die Stellung der Regelstange der Einspritzpumpe zur Ermittlung der Belastung des Motors herangezogen wird, wobei an der Regelstange ein Positionsgeber angeordnet ist. Die Stellung der Regelstange ist aber insbesondere im Schubbetrieb ein ungenügendes Kriterium für das tatsächliche Ausmass der Belastung des Motors, und die Verwendung von Positionsgebern an der Regelstange erfordert eine zusätzliche Kompensation der thermischen Ausdehnung der Regelstange im Betrieb. Insbesondere bei Kraftfahrzeugmotoren, bei welchen häufig ein Schubbetrieb auftritt, kann daher mit der bekannten Einrichtung die Schadstoffemission nicht in der erforderlichen Weise optimiert werden.

Die Erfindung zielt nun darauf ab, ein Verfahren der eingangs genannten Art zu schaffen, mit welchem die Schadstoffemission und der Verbrauch einer Einspritzbrennkraftmaschine, insbesondere eines Dieselmotors, bei allen Betriebszuständen und insbesondere auch im Schubbetrieb verringert werden kann. Zur Lösung dieser Aufgabe besteht die Erfindung im wesentlichen darin, dass das Motordrehmoment aus dem von einem Turbolader erzeugten Ladedruck und der ab einem bestimmten, maximal zulässigen Ladedruck bei steigender Drehzahl abgeblasenen Luftmenge ermittelt wird. Bei Ausbildungen, bei welchen der Turbolader so ausgelegt ist, dass der maximale Druck des Turboladers erst bei der höchsten zulässigen Drehzahl erzielt wird, genügt die Messung des Ladedrucks für die Bestimmung des vom Motor abgegebenen Drehmoments, wobei dieser Messwert auch dann den tatsächlichen Verhältnissen Rechnung trägt, wenn der Motor im Schubbetrieb betrieben wird. Bei Ausbildungen des Turboladers, bei welchen der Lader für hohen Druck und damit hohe Leistung der Brennkraftmaschine bei niederen Drehzahlen ausgelegt ist, wird bereits vor Errreichen der maximal zulässigen Drehzahl der Brennkraftmaschine der maximale, vom Turbolader erzeugte Ladedruck erzielt bzw. der maximal zulässige Ladedruck abgegeben. In diesen Fällen wird ab einer bestimmten Drehzahl eine steigende Luftmenge abgeblasen, so dass zusätzlich die Menge der abgeblasenen Luft ermittelt werden muss, um eine korrekte Aussage über den Belastungszustand des Motors zu erhalten. Für die Verstellung des Förderbeginns der Kraftstoffeinspritzpumpe wird in allen Fällen zusätzlich die Drehzahl des Motors berücksichtigt. Mit diesem Verfahren kann mit einfachen und betriebssicheren Messwertgebern das Auslangen gefunden werden. Durch die Messung des Signals für das Motordrehmoment und die Verarbeitung dieser Messgrösse in einem Mikroprozessor lässt sich eine Stellgrösse für die Verstellung des Einspritzzeitpunktes errechnen, wobei die lastabhängige Verstellung des Spritzbeginns beim Dieselmotor neben der Verringerung der Schadstoffemission auch eine Verbesserung der Leistungs- und Verbrauchswerte und eine Verminderung der thermischen und mechanischen Beanspruchung der Motorbauteile mit sich bringt.

Der Einspritzzeitpunkt muss in bekannter Weise in Abhängigkeit von der Motordrehzahl verstellt werden, und die Verwendung eines Mikroprozessors ermöglicht es, in besonders einfacher Weise die Einflüsse von Motordrehzahl und Lastmoment gleichzeitig in eine gemeinsame Stellgrösse für die Vertellung des Einspritzzeitpunktes umzusetzen. Die Verstellung des Einspritzzeitpunktes kann je nach Konstruktion der Einspritzpumpe in verschiedener Weise erfolgen; beispielsweise kann bei einer Ausbildung, bei welcher die Einspritzpumpe über einen Kipphebel von einer Nockenwelle angetrieben wird, der Lagerpunkt durch Betätigung eines Exzenters verschoben werden, wodurch sich ein früherer oder späterer Einspritzzeitpunkt ergibt. Die Verstellung dieses Exzenters kann beispielsweise hydraulisch oder elektrisch, beispielsweise mittels eines Schrittmotors, erfolgen. Eine Einrichtung zur Feststellung des Förderbeginns einer Einspritzpumpe ist beispielsweise aus der AT-B Nr. 298881 bekannt geworden. Bei dieser Ausbildung wird eine Kupplungsmuffe axial verschoben, wodurch die beiden, durch die Muffe verbundenen Wellen, welche Aussenverzahnungen mit verschiedenen Steigungen aufweisen, gegeneinander verdreht werden. Die Verschiebung der Kupplungsmuffe dieser bekannten Einrichtung kann beispielsweise hydraulisch, elektrisch und insbesondere mittels eines Schrittmotors erfolgen. Bei Einspritzpumpen, welche eine gesonderte Regelstange für die Verstellung des Einspritzzeitpunktes aufweisen, kann beispielsweise ein Schrittmotor unmittelbar kraftschlüssig mit dieser Regelstange gekoppelt werden. Ein Schrittmotor könnte ohne Zwischenschaltung von weiteren Bauteilen vom Mikroprozessor angesteuert werden. Für eine hydraulische Betätigung des Spritzverstellers müsste eine entsprechende mechanisch-hydraulische Umsetzung des Stellsignales erfolgen. Erfindungsgemäss kommen eine Reihe von Signalen für eine Auswertung in einem Mikroprozessor in Betracht, welche entweder direkt proportional der Last sind oder aber in einer einfachen Gesetzmässigkeit zur Last stehen.

Vorzugsweise werden für die Ermittlung des Motordrehmoments Messwerte für die Drehzahl und gegebenenfalls die Abgastemperatur und/ oder den Kohlenmonoxydgehalt der Abgase herangezogen, so dass sich die Verbesserung der Schadstoffemission besonders exakt erzielen lässt. Für die Messung der Abgasluftmenge kann in besonders einfacher Weise der Öffnungshub des Abgasventils gemessen werden, wodurch auch hier mit einfachen Messwertgebern gearbeitet werden kann.

Die erfindungsgemässe Vorrichtung zur Durchführung dieses Verfahrens weist Messwertaufnehmer für Betriebsgrössen, wie Drehzahl, Ladedruck, Motortemperatur od. dgl., sowie wenigstens einen weiteren Messwertaufnehmer zur Ermittlung des jeweils vom Motor abgegebenen Drehmomentes auf, welche Messwertaufnehmer mit einem Prozessor zum Ausführen von mindestens einer Rechenoperation verbunden sind, welcher Prozessor einen Speicher zur Speicherung des auszuführenden Programms aufweist, und mit einer mit dem Prozessor verbundenen Betätigungseinrichtung zur Steuerung des Beginns der Kraftstofförderung der Einspritzpumpe. Die genannte Vorrichtung ist erfindungsgemäss im wesentlichen dadurch gekennzeichnet, dass ein Messwertaufnehmer für den Ladedruck vorgesehen ist, und dass ein weiterer Messwertaufnehmer als Drucksensor für den an einer Drosselstelle anfallenden Druckunterschied ausgebildet ist und einen Wert für die Abblasluftmenge dem Prozessor weiterleitet. Die Ausbildung kann hiebei in einfacher Weise so getroffen sein, dass ein Messwertaufnehmer als elektrisch beheizter oder gekühlter, im Luftstrom der Abblasluft befindlicher Draht ausgebildet ist, welcher über die Temperaturverminderung bzw. -veränderung einen Wert für die Abblasluftmenge dem Prozessor zur Verfügung stellt. In allen Fällen werden unmittelbar elektrische Signale erzielt, welche in einen Mikroprozessor weitergeleitet werden können.

Das den Mikroprozessor enthaltende Steuergerät kann mit einem Stellglied für die Einstellung des Beginns der Kraftstofförderung verbunden sein, welches von einem hydraulischen oder pneumatischen Arbeitskolben, einem elektrischen Hubmagneten, einem Elektromotor, einem elektrischen Stellmotor oder einem elektrischen Schrittmotor gebildet ist. Da dem Steuergerät nicht nur ein lastabhängiges Signal, sondern in der Regel auch ein der Drehzahl entsprechendes Signal zugeführt wird, lassen sich komplizierte Zusammenhänge mit einem gemeinsamen Stellglied dieser Art bewerkstelligen. Hiebei kann vorzugsweise so vorgegangen werden, dass auf Grund der in das Steuergerät eingesteuerten Drehzahl- und Lastsignale ein im Steuergerät gespeicherter Spritzverstellungskennwert abgerufen und dem Stellglied zugeordnet wird.

Die EP-A Nrn. 49701, 49702 und 49704, welche gleiche Anmelde- und Prioritätstage haben, beschreiben jeweils ein ähnliches Verfahren zur Steuerung des Förderbeginns einer Einspritzpumpe sowie eine ähnliche Vorrichtung zur Durchführung dieses Verfahrens, wobei lediglich das Motordrehmoment durch unterschiedliche Parameter ermittelt wird.

Die Erfindung wird nachfolgend an Hand der Zeichnung näher erläutert, in welcher eine Einrichtung zur last- und drehzahlabhängigen Spritzverstellung gezeigt ist, bei welcher die Spritzverstellung durch Differenzdrehbewegung zwischen Pumpenantrieb und Pumpennockenwelle erzeugt wird.

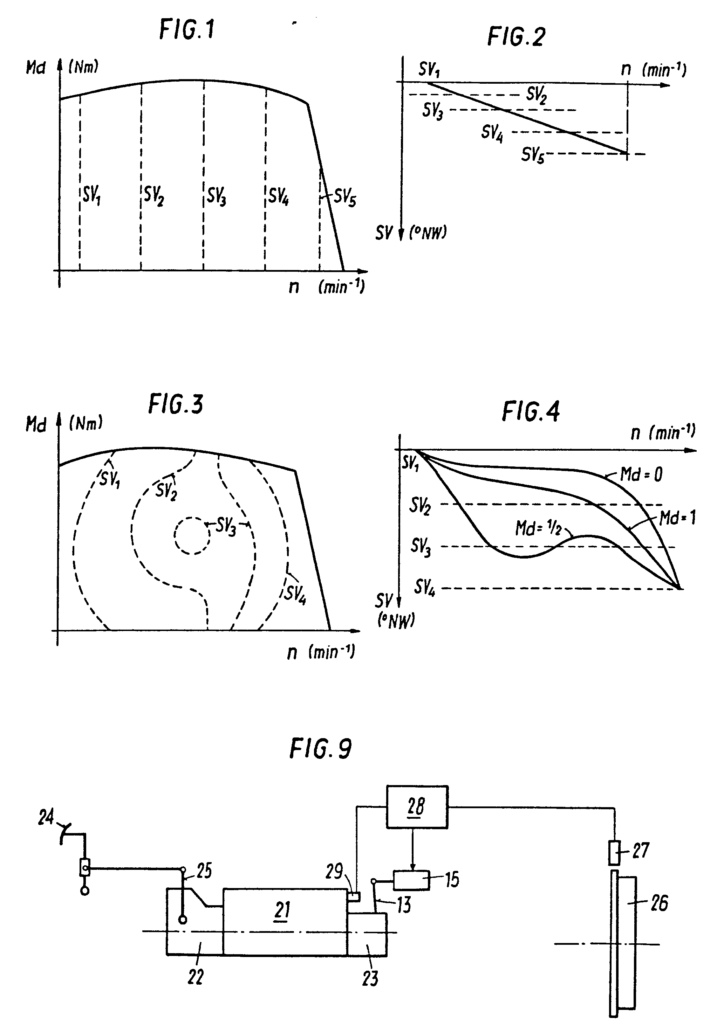

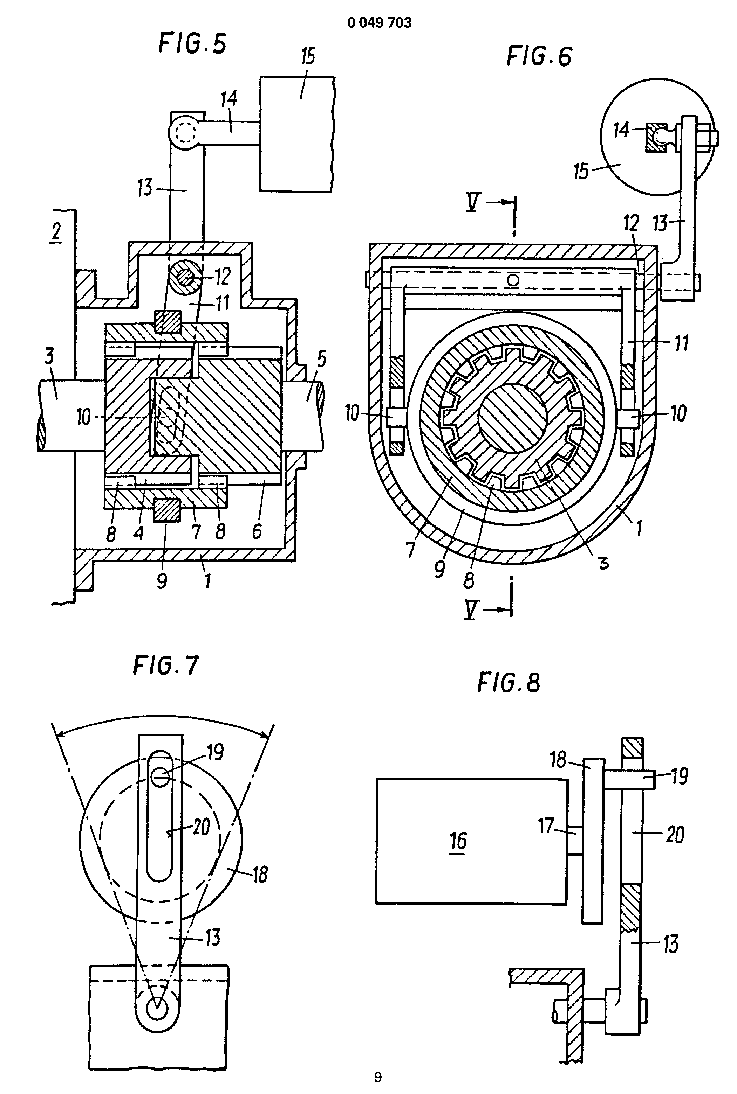

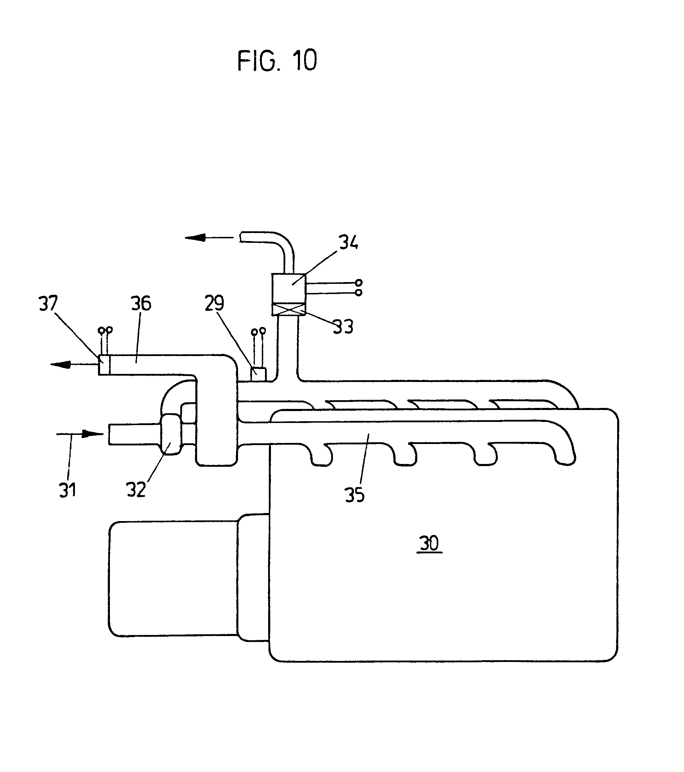

Fig. 1 und 2 zeigen den linearen Spritzverstellungs-Drehzahlzusammenhang unabhängig vom Drehmoment des Motors, wie er bei konventionellen Regelungen vorgenommen wird. Die Spritzverstellungskurven im Motorkennfeld sind daher Geraden über der Drehzahl. In Fig. 3 und 4 sind drehzahl- und lastabhängige Spritzverstellungen dargestellt, wie sie erfindungsgemäss erzielbar sind. Fig. 5 und 6 zeigen eine Einrichtung zur Verstellung des Drehwinkels zwischen Pumpenantrieb und Pumpennockenwelle im Schnitt, wobei Fig. 5 einen Schnitt nach der Linie V-V der Fig. 6 darstellt. Fig. 7 und 8 zeigen eine Ausbildung des Stellgliedes als Schrittmotor, Fig. 9 einen schematischen Gesamtaufbau für ein Einspritzsystem und Fig. 10 eine schematische Darstellung der Anordnung der Messwertaufnehmer an einem Dieselmotor.

In Fig. 1 ist auf der Abszisse die Motordrehzahl $(min^{-1})$ und auf der Ordinate das Motordrehmoment in Nanometer aufgetragen. Wie aus Fig. 2 hervorgeht, ergibt die Spritzverstellung bei verschiedenen Motordrehzahlen, aufgetragen auf der negativen Ordinatenachse als Nockenwellenwinkel in Grad vor dem oberen Totpunkt des Kolbens der Brennkraftmaschine, eine Gerade, welche bei der konventionellen Regelung unabhängig vom Motordrehmoment ist. Abweichend von derartigen konventionellen Verstellcharakteristiken sind in den Fig. 3 und 4 den Fig. 1 und 2 analoge Darstellungen für verschiedene Motordrehmomente wiedergegeben, wobei beliebige drehzahl- und lastabhängige Spritzverstellungen möglich sein sollen.

Die Möglichkeit für die Erzielung der in Fig. 3 und 4 wiedergegebenen Charakteristiken wird beispielsweise durch eine Ausbildung der Verstelleinrichtung für den Einspritzzeitpunkt nach den Fig. 5 und 6 gegeben, wobei das Stellglied von einer Steuereinrichtung angesteuert wird. In Fig. 5 und 6 ist mit 1 ein Gehäuse bezeichnet, das z.B. am Einspritzpumpengehäuse 2 angeflanscht ist. Im Gehäuse 1 befindet sich die Welle 3, die eine Aussenverzahnung 4 besitzt. In der Welle 3 und im Gehäuse 1 ist eine zweite Welle 5 gelagert, die ebenfalls eine Aussenverzahnung 6 trägt. Die Schiebemuffe 7, die eine Innenverzahnung 8 besitzt, ist über einen Gleitring 9 längs verschiebbar. Durch die Kombination von Schrägverzahnungen bzw. Geradverzahnungen und Schrägverzahnungen wird durch die Längsverschiebung der Schiebemuffe 7 eine Relativbewegung der Wellen 3 und 5 zueinander erreicht. Auf dem Gleitring 9 sind Bolzen 10 angebracht, die über ein Gestänge 11 von einer Welle 12 und einem Aussenhebel 13 betätigt werden. Je nach Lage des Aussenhebels 13 ergibt sich nun eine ganz definierte Stellung der Schiebemuffe 7 und damit eine entsprechende Drehdifferenz zwischen den Wellen 3 und 5. Da die Drehdifferenz zwischen den Wellen 3 und 5 der Spritzverstellung proportional ist, kann damit über den Aussenhebel 13 jede beliebige Spritzverstellung erreicht werden. Der Aussenhebel 13 ist über eine Stange 14 mit einem Stellmotor 15 verbunden. Dieser steuert in Funktion der Motorlast und des Motordrehmomentes die Lage der Schiebemuffe 7 und damit die Spritzverstellung. Der Stellmotor 15 kann sowohl nach dem hydraulischen, pneumatischen oder elektrischen Prinzip arbeiten. Voraussetzung ist, dass der Stellmotor 15 allen vorkommenden Last- und Drehzahländerungen des Verbrennungsmotors folgen kann.

Fig. 7 und 8 zeigen Ausführungsbeispiel mit einem Schrittmotor 16. Der Schrittmotor zeichnet sich durch eine hohe Schrittfrequenz und eine hohe Genauigkeit aus. Auf der Welle 17 sitzt eine Scheibe 18, in der sich ein Bolzen 19 befindet. Dieser Bolzen 19 greift in eine Nut 20 des Aussenhebels 13 ein. Je nach Drehlage des Schrittmotors wird nun der Aussenhebel 13 betätigt und damit die erforderliche Spritzverstellung erreicht.

In Fig. 9 ist der schematische Gesamtaufbau für ein konventionelles Einspritzsystem dargestellt. Die Erfindung ist jedoch nicht notwendigerweise mit einem derartigen Einspritzsystem gekoppelt, sondern ist für jedes beliebige Einspritzsystem gedacht. An der Pumpe 21 befindet sich ein Regler 22 und der angebaute Spritzversteller 23. Über den Fahrfusshebel 24 wird nun der Aussenhebel 25 des Reglers betätigt und damit die erforderliche Motordrehzahl bzw. Motorlast vorgewählt. Am Schwungrad 26 des Verbrennungsmotors befindet sich ein Aufnehmer 27, der die Drehzahl misst. Diese Drehzahl wird in das Steuergerät 28 übertragen. Gleichzeitig wird über einen Aufnehmer das Motordrehmoment festgestellt. In Fig. 9 ist dieser Aufnehmer mit 29 schematisch angedeutet. Das Signal des Messwertaufnehmers 29, welches dem Lastmoment proportional ist, wird an das Steuergerät 28 weitergeleitet. In dem Steuergerät 28 sind die Soll-Spritzverstellungskennwerte gespeichert. Aus der Messung von Motordrehmoment und Motordrehzahl ist der Lastpunkt im Motorkennfeld genau definiert, und damit auch die erforderliche Spritzverstellung. Das Steuergerät 28 steuert nun entsprechend dem Motorlastpunkt den Stellmotor 15 an, der über den Aussenhebel 13 die gewünschte Spritzverstellung einstellt.

In Fig. 10 ist der Motor mit 30 bezeichnet. Die Ansaugluft tritt bei 31 ein und wird von einem Abgasturbolader 32 komprimiert. Der Ladedruck wird durch den Messwertaufnehmer 29 registriert, wobei im dargestellten Fall ein Abblasventil 33 vorgesehen ist, über welches bei steigender Drehzahl ein Teil der Luft wieder abgeblasen wird. Am Abblasventil 33 ist ein Messwertaufnehmer 34 festgelegt, mit welchem die Abblasmenge bestimmt wird.

Die vom Motor abgegebenen Abgase gelangen über die Abgassammelleitung 35 und den Turbolader in die Auspuffleitung 36, wobei ein weiterer Messwertaufnehmer 37 vorgesehen ist, mit welchem der CO-Gehalt bzw. die Temperatur der Abgase bestimmt werden kann. Die Signale der Messwertaufnehmer 29, 34 und 37 können unmittelbar dem Mikroprozessor im Steuergerät 28 zugeführt werden und es lässt sich auf diese Weise ein genaues Steuersignal für die Verstellung des Spritzzeitpunktes zur Erzielung von besonders günstigen Emissions- und Verbrauchswerten ableiten.

Als weitere Ausführungsform ist denkbar, dass die beliebige last- und drehzahlabhängige Spritzverstellung über eine lastabhängige Bedienung des Aussenhebels der Einrichtung gemäss der AT-B Nr. 298881 erreicht wird. Die drehzahlabhängige Spritzverstellung kann in Abhängigkeit von dem beispielsweise in der AT-B Nr. 298881 dargestellten Drehzahlmesswerk erfolgen. Bei Verwendung eines Mikroprozessors lassen sich die Werte für die Drehzahl und für lastabhängige Signale in beliebiger Weise kombinieren, so dass den speziellen Erfordernissen einer bestimmten Brennkraftmaschine in verbessertem Masse Rechnung getragen werden kann.

## Patentansprüche

1. Verfahren zur Steuerung des Förderbeginns einer Einspritzpumpe für Einspritzbrennkraftmaschinen, insbesondere zur Kraftstoffeinspritzung an einem Dieselmotor, bei welchem Betriebsgrössen, wie Drehzahl, Ladedruck, Motortemperatur od. dgl., gemessen werden und das jeweils vom Motor abgegebene Drehmoment ermittelt wird, worauf in Abhängigkeit von dem ermittelten Motordrehmoment unter Berücksichtigung zumindest der gemessenen Drehzahl der Förderbeginn der Kraftstoffeinspritzpumpe verstellt wird, dadurch gekennzeichnet, dass das Motordrehmoment aus dem von einem Turbolader erzeugten Ladedruck und der ab einem bestimmten, maximal zulässigen Ladedruck bei steigender Drehzahl abgeblasenen Luftmenge ermittelt wird.

2. Verfahren nach Anspruch 1, dadurch gekennzeichnet, dass für die Ermittlung des Motordrehmoments Messwerte für die Drehzahl und gegebenenfalls die Abgastemperatur und/oder den Kohlenmonoxydgehalt der Abgase herangezogen werden.

3. Verfahren nach einem der Ansprüche 1 oder 2, dadurch gekennzeichnet, dass die Abblasluftmenge aus dem Öffnungshub des Abblasventils ermittelt wird.

4. Vorrichtung zur Durchführung des Verfahrens nach einem der Ansprüche 1, 2 oder 3, mit Messwertaufnehmern (27, 29) für Betriebsgrössen, wie Drehzahl, Ladedruck, Motortemperatur od. dgl., sowie wenigstens einem weiteren Messwertaufnehmer (34) zur Ermittlung des jeweils vom Motor (30) abgegebenen Drehmoments, welche Messwertaufnehmer mit einem Prozessor zum Ausführen von mindestens einer Rechenoperation verbunden sind, welcher Prozessor einen Speicher zur Speicherung des auszuführenden Programms aufweist, und mit einer mit dem Prozessor verbundenen Betätigungseinrichtung (13, 15) zur Steuerung des Beginns der Kraftstoffförderung der Einspritzpumpe (21), dadurch gekennzeichnet, dass ein Messwertaufnehmer (29) für den Ladedruck vorgesehen ist und dass ein weiterer Messwertaufnehmer (34) als Drucksensor für den an einer Drosselstelle anfallenden Druckunterschied ausgebildet ist und einen Wert für die Abblasluftmenge dem Prozessor weiterleitet.

5. Vorrichtung nach Anspruch 4, dadurch gekennzeichnet, dass ein Messwertaufnehmer (34) als elektrisch beheizter oder gekühlter, im Luftstrom der Abblasluft befindlicher Draht ausgebildet ist, welcher über die Temperaturverminderung bzw. -veränderung einen Wert für die Abblasluftmenge dem Prozessor zur Verfügung stellt.

## Revendications

1. Procédé pour commander l'avance d'une pompe d'injection pour moteurs à combustion interne à injection, en particulier pour l'injection de carburant dans un moteur diesel, dans lequel on mesure des grandeurs de fonctionnement telles que la vitesse de rotation, la pression d'admission, la température du moteur ou analogues, et on détermine le couple délivré par le moteur, l'avance de la pompe d'injection de carburant étant réglée en fonction du couple moteur déterminé en prenant en compte au moins la vitesse de rotation mesurée, caractérisé par le fait que le couple moteur est déterminé à partir de la pression d'admission produite par un turbocompresseur et d'une quantité d'air évacué à partir d'une pression d'admission admissible maximale déterminée, lorsque la vitesse de rotation augmente.

2. Procédé selon la revendication 1, caractérisé par le fait que, pour déterminer le couple moteur, on utilise des mesures de la vitesse de rotation et, le cas échéant, de la température des gaz d'échappement et/ou de la teneur en monoxyde de carbone des gaz d'échappement.

3. Procédé selon l'une des revendications 1 ou 2, caractérisé par le fait que la quantité d'air évacué est déterminée à partir de la course d'ouverture de la soupape d'évacuation.

4. Dispositif pour la mise en œuvre du procédé selon l'une des revendications 1, 2 ou 3, comprenant des capteurs (27, 29) pour des grandeurs de fonctionnement telles que la vitesse de rotation, la pression d'admission, la température du moteur ou analogues, ainsi qu'au moins un autre capteur (34) pour déterminer le couple délivré par le moteur (30), lesdits capteurs étant reliés à un calculateur pour effectuer au moins une opération de calcul, ledit calculateur comportant une mémoire pour contenir le programme à mettre en œuvre, et un mécanisme d'actionnement (13, 15) relié au calculateur pour commander le début de l'alimentation en carburant par la pompe d'injection (21), caractérisé par le fait qu'il comprend un capteur (29) pour la pression d'admission et qu'un autre capteur (34) est réalisé sous la forme d'un capteur de pression pour la différence de pression provoquée à un endroit d'étranglement, et délivre au calculateur une information sur la quantité d'air évacué.

5. Dispositif selon la revendication 4, caractérisé par le fait qu'un capteur (34) est réalisé sous la forme d'un fil chauffé électriquement ou refroidi dans le courant d'air évacué et fournit au calculateur une valeur de la quantité d'air évacué par suite d'une diminution ou variation de température.

## Claims

1. A method of controlling the timing of an injection pump for injection-type internal combustion engines, particularly for the fuel injection into a Diesel engine, in which method operating parameters such as revolution speed, intake pressure, temperature of the engine or the like are measured and the torque supplied by the engine is determined, whereupon the begin of delivery of the fuel injection pump is adjusted in dependence on the engine torque determined and with consideration of at least the measured revolution speed, characterised in that the engine torque is determined from the intake boost pressure generated by a turbocharger and from that amount of air which is blown off above a certain, maximum-admissible intake boost pressure at increasing revolution speed.

2. A method as claimed in claim 1, characterised in that for determining the engine torque measured values for the revolution speed and optionally for the exhaust gas temperature and/or the carbon monoxide content of the exhaust gases is used.

3. A method as claimed in claim 1 or 2, characterised in that the amount of air blown off is derived from the opening stroke of the exhaust valve.

4. An apparatus for performing the method as claimed in claim 1, 2 or 3, comprising sensors (27, 29) for operating parameters such as revolution speed, intake pressure, engine temperature or the like as well as at least one further sensor (34) for determining the torque supplied by the engine (30), said sensors being connected with a processor for performing at least one calculating operation and said processor comprising a store for storing the program to be executed, said apparatus further comprising an actuating means (13, 15) for controlling the begin of fuel delivery of the injection pump (21) and said actuating means being connected with the processor, characterised in that a sensor (29) for the intake boost pressure is provided and that a further sensor (34) is designed as pressure sensor for the pressure difference occurring across a restrictor and supplies to the processor a value corresponding to the amount of air blown off.

5. An apparatus as claimed in claim 4, characterised in that one sensor (34) is designed as electrically heated or cooled wire located within the air stream of the air blown off and provides to the processor a value for the amount of air blown off based on the temperature reduction or temperature change, resp.

## FIG.1

## FIG.2

## FIG.3

## FIG.4

## FIG.9

7

**FIG.5**

**FIG.6**

**FIG.7**

**FIG.8**

FIG. 10